Europäisches Patentamt

European Patent Office

Office européen des brevets

(11) Publication number: 0 385 215
A2

# EUROPEAN PATENT APPLICATION

(21) Application number: 90103138.5

(51) Int. Cl.⁵: G06F 15/20

(22) Date of filing: 19.02.90

(30) Priority: 28.02.89 IT 1959089

(43) Date of publication of application:
05.09.90 Bulletin 90/36

(84) Designated Contracting States:
DE FR GB

(71) Applicant: MECCANIZZAZIONE POSTALE E
AUTOMAZIONE SPA
Piane S. Atto Casella Postale 132
I-64020 Teramo(IT)

(72) Inventor: Scata, Mario
Via Fonte Baiano 74
Teramo(IT)
Inventor: Passero, Adolfo
Via S. Pio X
Teramo(IT)

(74) Representative: Weinmiller, Jürgen et al
Lennéstrasse 9 Postfach 24
D-8133 Feldafing(DE)

(54) Arrangement for production island flexible systems.

(57) The present invention generally belongs to the technical field of electronic apparatuses for industrial production and particularly relates to an arrangement for production island flexible systems, in which there are one or more indipendent units which,being provided each with its own control system, are connected to a line processor through which they interact and which acts as a production informative system sending them all instructions contained in a control software relative to working programs.The connection between line processor and the units is performed through infrared rays or laser beams.

Infrared rays respectively laser receivers are interposed between the line processor and the production unit which,in turn,is provided with its own computer which,by receiving instruction from the line processor,allows the handling means installed on the unit to carry out the production process according to the working program and for further developing an optimum handling of production times.

EP 0 385 215 A2

The invention is directed to an arrangement for production island flexible systems which allows to carry out,both in an automatic and not automatic way,a series of production processes concerning any working schedule.

As it is known,in the field of production systems and/or apparatuses,it is always required to optimize the working and production activities,both from government and mere productive practice viewpoints.

The present trend in satisfying such requirements consists in robotizing the various production activities by subdividing them into production areas, each of which being capable to carry out one or more particular working processes.

The units performing the working schedules for each area are normally connected,according to the technique at present in use,to a line unit by means of connection cables which supply both the feed to the structure of the unit,performing the working schedules,and the informative details pertinent to the particular process to be carried out.

The units then travel on rails and move on a prearranged area,which characterizes the production island,so as to carry out the different steps of the working process.

This fact causes a series of limitations to the working process.

More precisely,it is not possible to move the unit to a certain distance since,otherwise,a long cable would be required.Such a cable,moreover,is rather bulky having to enclose both the informative connections and the feed ones.

Further,it is necessary to point out the fact that the continuous mechanical motion of the cable, which stretches and contracts because displacements, provokes a mechanical wear of the same,which does not assure the reliability of the machine in time and its flexibility.

Moreover,that unit,being rigidly connected with the informative system,cannot be flexible as to of variability of routes and variability of production processes,since it must be able to carry out only and exclusively determinate working schedules.

For such reason,the systems nowadays in use cannot be considered as flexible both from government and working schedule practice viewpoints,since they are to be considered as dedicated to specific production aspects and,in order to vary the working schedules,it is necessary to create new production islands structured in such a way.

The object of the present invention is to eliminate the above mentioned drawbacks in connection with the systems and apparatuses at present in use,by realizing and providing a structure that may be considered an arrangement for production island flexible systems in which it is possible to diversify the working schedules,to schedule the same according to the necessities as they arise,and to reduce the working times as well as to optimize and vary the production routes.

This object and others which will become apparent from the following description,are reached according to the present invention,by an arrangement for production island flexible systems characterized in that it includes one or more independent units,each provided with an own independent control system and all being connected to a line processor,through which they interact,the line processor being linkable to a main frame,for factory government,and acting as manufacturing information system, and wherein is stored the whole control software pertinent to master schedules so that each unit can perform a specific series of operations,upon instructions set up by the operator on a keyboard and forwarded by the line operator to the indipendent control system of the involved unit through infrared rays detected by a receiver mounted on the same unit.

According to another aspect of the invention the connection of each unit to the line processor is performed by means of laser beams.

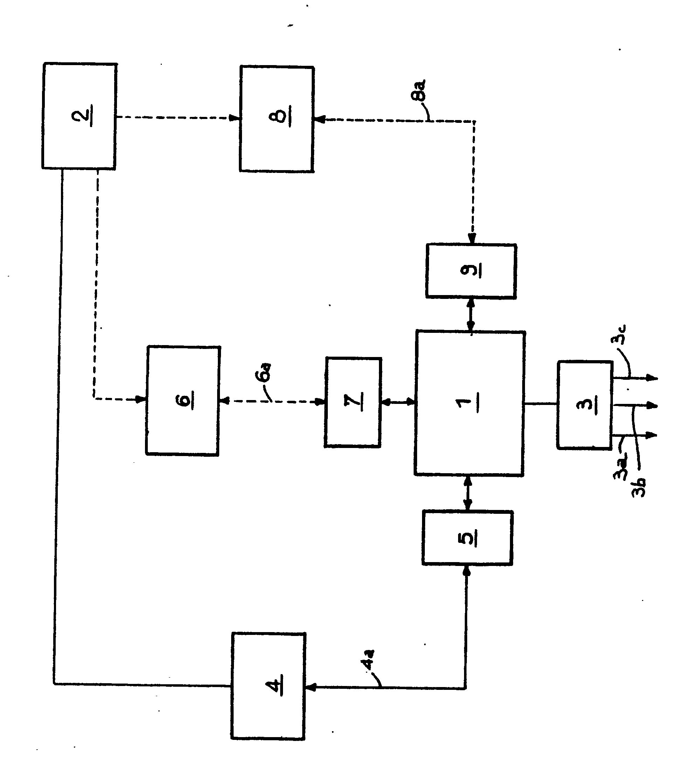

Further characteristics and advantages of the invention will become more evident from a detailed description of a preferred but not exclusive embodiment of an arrangement for production island flexible systems given below,taken in connection with the accompanying drawing attached by way of an indicative and therefore not limitative example,which illustrates a schematic block diagram of the structure of such arrangement according to the present invention.

Referring now to such figure,numeral reference 1 indicates the on board computer associated to the self-contained working unit.

Such computer communicates with a line processor 2,which provides instructions about master schedule being itself provided with a proper control software.

The on board computer 1 governs,in turn, the monitoring of motors for moving the unit,through a motors control system 3 which governs the upward and downward motions 3a,the traverse motion 3b, and the lateral displacements 3c of the unit itself.

The line processor 2 communicates with on board computer 1 through a physical connection represented by a plurality of connection cables 4a,running in a rolling cable which interface the on board computer 1 through a special physical interface 5.The on board actuating motors are feeded through bars 4.

Alternatively,in the figure there is shown a connection obtained through an infrared rays source 6 emitting radiations 6a received by on board computer through a receiver 7.Still in alternative,the line processor 2 interacts and is connected with on board computer 1 through a laser beam source represented by block 8 and by laser beams 8a detected by on board computer 1 through a receiver 9.

Obviously,the line processor is provided,in turn,with emitters,not shown in the figure,for these two latter kinds of connection.

After a description in a mainly structural meaning,the operation of the arrangement according to the present invention is the following.

As concerns the operation,it must be specified that each unit is to be considered as an arm of the production island and,normally,in each island three or at least two arms interconnected by means of mechanical translating connections are considered.

In relation to the present invention, the handling occurs through the control governed by the on board computer which runs the actuating motors.

Usually each unit, having received the instructions from the management computer,mamely the line processor 2,stores such instructions and processes them by its on board software,and performs the relevant working schedule.

As concerns a manufacturing program,for instance the assembling of printed board assemblies,there are dimensioning standards of such areas for each arm which must assure a determinate manufacturing activity.The control for each arm,that is for each computer 1,occurs indipendently so that it is also possible to perform a semi-automatic cycle when one of the arms is out of use.

The line computer 2 can be programmed through a keyboard so that to set up the works for each island.

The on board computer 1 of the working unit provides for drawing the material to be worked,for the execution of the working and for arranging it into suitable containers.

That allows the optimization both of the effective execution times and of the displacement times.

All the working schedules are then displayed as a usual logbook in order to emphasize the end,the shifts and the time necessary for doing the work so that eventual statistical analysis on the quality of the working schedule can be carried out.

In case of failure the line processor may remote-control a diagnotor, also on the board computer.

The connection through infrared rays or laser beams allows to make more indipendent the unit which the on board computer 1 is installed on,thus enlarging the flexibility of the whole system and optimizing the working schedule both from the handling viewpoint and the management angle.

The line processor may be connected to the factory main frame (not shown in figure) in order to allow the subsequent development of statistical programs about working hours and for product handling.

The line processor may also govern a plurality of lines in which such indipendent units are located.

Obviously,the invention is not restricted to the sole embodiment as hereinabove described, but various modifications and changements are also possible,all falling within the inventive sphere.

## Claims

1. An arrangement for production island flexible systems,characterized in that it comprises one or more indipendent units, each provided with its own indipendent control system and connected to a line processor,through which they interact,which line processor is connectable to a main frame for factory management and acts as a manufacturing information system,and in which the whole control software related to working programs is contained,in such a way as to make each unit perform a specific series of operations,upon instructions set up by the operator on a keyboard and forwarded by the line operator to the indipendent control system of the involved unit through infrared rays detected by a receiver mounted on the unit itself.

2. An arrangement for production island flexible systems according to claim 1,characterized in that the independent control system of each unit consists of an on board computer interconnected with the handling means of the same unit.

3. An arrangement for production island flexible systems according to claim 1,characterized in that the connection of each unit to the line processor is performed by means of laser beams.